# EUROPÄISCHE PATENTSCHRIFT

(11) **EP 3 507 852 B1**
(45) Veröffentlichungstag und Bekanntmachung des Hinweises auf die Patenterteilung: **05.08.2020**
(21) Anmeldenummer: 17771987.9
(22) Anmeldetag: 30.08.2017
(51) Int. Cl.: H01M 10/6555, H01M 10/6557, H01M 10/613, H01M 2/10, H01M 10/643, H01M 2/20

(54) **VERBINDUNGSPLATTE FÜR EINE BATTERIE UND BATTERIE**
CONNECTION PLATE FOR A BATTERY AND BATTERY
PLAQUE DE LIAISON POUR BATTERIE ET BATTERIE

(30) Priorität: 30.08.2016 DE 202016104759 U; 05.09.2016 DE 102016116581
(43) Veröffentlichungstag der Anmeldung: 10.07.2019
(73) Patentinhaber: E-Seven Systems Technology Management Ltd, Valletta, VLT 1455 (MT)
(72) Erfinder: KRÄMER, Thomas, St. Julian's STJ 3140 (MT)
(74) Vertreter: Cohausz & Florack
(86) Internationale Anmeldenummer: PCT/EP2017/071703
(87) Internationale Veröffentlichungsnummer: WO 2018/041860

(56) Entgegenhaltungen:
- EP-A2- 1 906 126
- WO-A1-2015/164593
- AT-A1- 512 756
- DE-A1-102007 063 195
- DE-A1-102015 008 985
- US-A1- 2013 122 341
- US-A1- 2013 136 955

## Beschreibung

Die vorliegende Erfindung betrifft eine Verbindungsplatte zur Verbindung von Batteriezellen für eine Batterie entsprechend dem Oberbegriff des Anspruchs 1 Der Stand der Technik kennt Batterien mit einer Vielzahl einzelner Batteriezellen. Mit einer solchen Zellanordnung ist es möglich, eine Batterie mit einer gewünschten Kapazität und Spannung bereitzustellen. Zur Verschaltung der Batteriezellen in einer solchen Zellanordnung können beispielsweise geschweißte Zellverbinder oder Boriddraht verwendet werden. Diese sind jedoch nicht dazu geeignet, Wärmeenergie in geeigneter Weise aus der Batterie abzuführen.

Die AT 512 756 A1 offenbart eine Batterie in der mehrere Rundzellen über zwei übereinandergestapelte, elektrisch leitfähige Verbindurigsplatten mit einer dazwischen liegenden, isolierenden Trägerplatte verbunden sind.

Die US 2013/122341 A1 offenbart eine Batterie in der mehrere Zellen über schraubenartige Verbindungselemente, in einem isolierenden plattenförmigen Halteelement angeordnet, verbunden sind.

Der vorliegenden Erfindung liegt deshalb die Aufgabe zugrunde, eine Vorrichtung bereitzustellen, die zur Verschaltung von Batteriezellen in einer Batterie unter Abführung von Wärme aus der Batterie besonders gut geeignet ist.

Die Aufgabe wird gelöst durch eine Verbindungsplatte entsprechend dem Anspruch 1.

Eine solche Verbindungsplatte lässt sich zwischen mehreren Batteriezellen in einer Batterie einbringen. Sie ist somit dazu geeignet, die Batteriezellen miteinander thermisch und elektrisch leitfähig zu verbinden. In einem Batterieaufbau, in dem mehrere Verbindungsplatten parallel zueinander angeordnet sind und jeweils beidseitig von mehreren Batteriezellen kontaktiert werden, erfolgt somit eine Parallel- und Reihenschaltung der Batteriezellen. Ein thermischer und ein elektrischer Strom können besonders gut zwischen den Batteriezellen innerhalb der Batterie verteilt werden. Dabei fließt ein Wärmestrom aus den Batteriezellen über die Kontaktierungsstellen in die Verbindungsplatte. Über das Wärmeabfuhrelement kann ein Wärmestrom aus der Verbindungsplatte und damit aus der Batterie abgeführt werden.

Nicht entsprechend der Erfindung ist das Wärmeabfuhrelement als ein Kühlkanal, der von einem Kühlmittel durchströmbar ist, ausgebildet. Durch den mindestens einen Kühlkanal kann beispielsweise Wasser oder eine speziell vorgesehene Kühlflüssigkeit geleitet werden. Hierdurch kann Wärme besonders gut aus der Verbindungsplatte abgeführt werden. Erfindungsgemäß ist das Wärmeabfuhrelement als eine wärmeleitfähige Kernschicht ausgebildet. Eine solche Kernschicht ist ebenfalls besonders gut geeignet, um Wärme aus der Verbindungsplatte abzuführen.

Erfindungsgemäß kann die Kernschicht elektrisch leitfähig sein. Elektrisch leitfähige Materialien weisen in der Regel eine äußerst gute thermische Leitfähigkeit auf und sind somit außerordentlich gut dazu geeignet, Wärme aus der Platine nach außen abzuführen. Erfindungsgemäß ist in der Kernschicht mindestens ein Kühlkanal vorgesehen, der von einem Kühlmittel durchströmbar ist. Hierbei werden die vorteilhaften Eigenschaften einer wärmeleitfähigen Kernschicht und eines Kühlkanals kombiniert, wobei sich herausragende Wärmeabfuhreigenschaften ergeben.

Erfindungsgemäß kann die Verbindungsplatte mindestens einen, vorteilhafterweise mindestens zwei Kühlmittelanschlüsse aufweisen. Ein Kühlmittelanschluss dient dazu, einen Anschluss bereitzustellen, über den Kühlmittel in die Verbindungsplatte hereingeführt beziehungsweise aus dieser herausgeführt werden kann. Die Kühlmittelanschlüsse können jeweils auf der Vorderseite oder der Rückseite der Platine und/oder auf einer Seitenkante der Verbindungsplatte vorgesehen sein. Erfindungsgemäß ist die Verbindungsplatte als eine Platine mit einem nicht elektrisch leitfähigen Substrat ausgebildet, und jeweils zwei Kontaktierungsstellen sind als voneinander beabstandete Paare von elektrisch und thermisch leitfähigen Kontaktierungselementen ausgebildet, die nicht erfindungsgemäß in das Substrat eingebracht oder erfindungsgemäß auf das Substrat aufgebracht sind, wobei jedes Paar von Kontaktierungselementen ein erstes Kontaktierungselement auf der Vorderseite und ein zweites Kontaktierungselement auf der Rückseite der Verbindungsplatte umfasst, und wobei jedes erste Kontaktierungselement mit jedem zweiten Kontaktierungselement elektrisch und thermisch leitfähig verbunden ist.

Eine Platine besteht aus einem Substrat, auf der mindestens ein Leiterbahnelement sowie sonstige elektrische Bauelemente aufgebracht sein können. Durch die erfindungsgemäße Verbindungsplatte können zwei Batterieabschnitte einer Batterie zueinander parallel und in Reihe geschaltet werden und es wird eine hohe elektrische und thermische Leitfähigkeit zwischen den Endanschlüssen der Batteriezellen gewährleistet. Eine Platine lässt sich leicht handhaben, insbesondere dann, wenn das Substrat erfindungsgemäß als nichtleitendes Kunststoffmaterial ausgebildet ist, denn in diesem Fall weist sie ein niedriges Gewicht auf. Auf der Platine muss mindestens ein elektrisch und thermisch leitfähiges Material vorgesehen sein. Dieses kann so dimensioniert werden, dass eine ausreichende elektrische und thermische Leitfähigkeit erreicht wird. Durch das Substrat der Platine kann erfindungsgemäß das elektrisch und thermisch leitfähige Material mechanisch stabilisiert werden.

Eine elektrisch und thermisch leitfähige Verbindung zwischen dem ersten Kontaktierungselement und dem zweiten Kontaktierungselement kann erfindungsgemäß über eine Bohrung in der Platine hergestellt werden, die einen Innenrand aufweist, auf den eine elektrisch und thermisch leitfähige Metallschicht aufgebracht ist. Die Metallschicht ist vorzugsweise durch einen in der Bohrung angeordneten metallische Niet gebildet, auf den Innenrand aufgedampft oder auf den Innenrand aufgedruckt. Die Kontaktierungselemente jedes Paars von Kontaktierungselementen sind vorzugsweise vorder- und rückseitig einander gegenüber vorgesehen, sodass ein kleinstmöglicher Abstand zwischen den Kontaktierungselementen vorliegt.

Erfindungsgemäß umfasst das elektrisch nicht leitfähige Substrat zwei Substratschichten, die auf gegenüberliegenden Seiten des Wärmeabfuhrelements aufliegen. Die Substratschichten stellen eine elektrische Isolierung zwischen der Vorderseite beziehungsweise der Rückseite und einem Innenbereich der Platine her. Im Innenbereich der Platine ist erfindungsgemäß das Wärmeabfuhrelement vorgesehen.

Vorzugsweise sind die Kontaktierungselemente jedes Paars von Kontaktierungselementen mittels elektrisch und thermisch leitfähiger Stegelemente verbunden, die elektrisch gegenüber dem Wärmeabfuhrelement isoliert sind. Die Stegelemente müssen gegenüber einem Wärmeabfuhrelement, die erfindungsgemäß als eine elektrisch leitfähige Kernschicht ausgebildet ist, elektrisch isoliert sein, sodass ein unerwünschter Stromfluss vermieden werden kann. Zu diesem Zweck können die Stegelemente erfindungsgemäß eine Außenisolierung zumindest in einem Durchgangsbereich durch das Wärmeabfuhrelement hindurch aufweisen.

Es ist besonders vorteilhaft, wenn jedes Paar von Kontaktierungselementen mit jedem anderen Paar von Kontaktierungselementen über einen elektrisch und thermisch leitfähigen Verbindungsbereich auf der Verbindungsplatte verbunden ist. Ein solcher Verbindungsbereich kann in unterschiedlicher Weise ausgebildet sein. Vorzugsweise ist der Verbindungsbereich flächig ausgebildet. Hierbei kann sich der Verbindungsbereich erfindungsgemäß über die gesamte Fläche des Substrats erstrecken, wobei er lediglich durch die Kontaktierungsbereiche und durch elektrische Isolatoren, die die Kontaktierungsbereiche gemäß einer besonderen Ausführungsform der Erfindung umgeben, unterbrochen wird. Ein flächiger Verbindungsbereich verringert den elektrischen Widerstand zwischen den Kontaktierungsbereichen. Der Verbindungsbereich kann alternativ auch teilflächig ausgeführt sein, wobei um die elektrischen Isolatoren erfindungsgemäß flächige Leiterschleifen herumgeführt sind, die miteinander elektrisch und thermisch leitfähig verbunden sind.

Vorzugsweise ist an dem Verbindungsbereich mindestens ein Kontakt vorgesehen. Hierbei handelt es sich um einen zusätzlichen Kontakt, der nicht zur Kontaktierung durch eine Batteriezelle vorgesehen ist. Der Kontakt kann beispielsweise zum Anschluss einer Messvorrichtung dienen. Hierbei kann es sich um einen Temperaturfühler handeln. Ein mit zwei Kontakten verbundener Leiter kann erfindungsgemäß an den Kontaktierungselementen entlang geführt werden, um die Temperatur an den Kontaktierungselementen zu ermitteln. Dabei muss der Leiter von den Kontaktierungselementen und den Leiterschleifen elektrisch isoliert sein. Ferner kann erfindungsgemäß an der Leiterplatte ein mit den Kontakten verbundener externer Temperaturfühler vorgesehen sein, der an mindestens einer Batteriezelle anliegt, um deren Temperatur unmittelbar zu messen. Erfindungsgemäß kann der Kontakt auch zum Anschluss eines Bussystems dienen, über das auf der Platine vorgesehene Messvorrichtungen ausgelesen und/oder angesteuert werden können.

Es ist besonders bevorzugt, wenn mindestens ein Paar von Kontaktierungselementen mittig beabstandet zu einer elektrisch und thermisch leitfähigen Leiterschleife angeordnet ist, die das mindestens eine Paar von Kontaktierungselementen umschließt. Die Leiterschleife bildet dabei einen Teil des Verbindungsbereichs.

Erfindungsgemäß kann die Leiterschleife durchgehend in dem Substrat der Verbindungsplatte angeordnet sein, wobei sie auf der Vorder- und der Rückseite jeweils von einer isolierenden Schicht überzogen ist. Die Leiterschleife kann jedoch auch auf der Vorder- und/oder der Rückseite des Substrats in einer dünnen Schicht aufgebracht sein, wobei sie auf der Vorder- und der Rückseite von einer isolierenden Schicht überzogen ist. Ist die Leiterschleife auf der Vorder- und auf der Rückseite als dünne Schicht aufgebracht, so ist sie vorzugsweise in einer spiegelbildlichen Anordnung auf der Vorder- und der Rückseite vorgesehen.

Bei einer mittigen Beabstandung weist das Paar von Kontaktierungselementen zu gegenüberliegenden Kanten der umgebenden Leiterschleife jeweils den gleichen Abstand auf. Vorzugsweise ist die Leiterschleife kreisförmig ausgebildet. In diesem Fall ist das Paar von Kontaktierungselementen als mittig beabstandet anzusehen, wenn es im Zentrum des durch die Leiterschleife gebildeten Kreises angeordnet ist. Es ist aber auch möglich und erfindungsgemäß vorgesehen, dass die Leiterschleifen von einer Kreisform abweichende Formen wie beispielsweise eine elliptische Form, eine rechteckige Form oder eine Knochenform aufweisen.

Vorzugsweise ist mindestens eine Leiterschleife von mindestens einer weiteren Leiterschleife umschlossen, wobei sich unmittelbar umschließende Leiterschleifen elektrisch und thermisch leitfähig miteinander verbunden sind. Es hat sich überraschenderweise herausgestellt, dass durch die Verwendung mehrerer sich umschließender Leiterschleifen je Paar von Kontaktierungselementen die positiven Effekte auf die Temperaturentwicklung innerhalb der Batterie weiter erhöht werden können.

Gemäß einer besonders bevorzugten Ausführungsform der Erfindung ist mindestens eine ein Paar von Kontaktierungselementen umschließende Leiterschleife beziehungsweise mindestens eine ein Paar von Kontaktierungselementen umschließende äußere Leiterschleife so auf der Platine angeordnet, dass sie mit mindestens zwei Leiterschleifen beziehungsweise äußersten weiteren Leiterschleifen elektrisch leitend verbunden ist, die andere Paare von Kontaktierungselementen umschließen. Durch die elektrisch und thermisch leitfähige Verbindung der Leiterschleifen sind indirekt auch die Paare von Kontaktierungselementen miteinander verbunden. Wird die Verbindungsplatte mit mehreren Batteriezellen einer Batterie vorder- und rückseitig über die Kontaktierungselemente der Verbindungsplatte verbunden, erfolgt somit eine Parallel- und Reihenschaltung der Batteriezellen.

Erfindungsgemäß kann die mindestens eine Leiterschleife beziehungsweise die mindestens eine weitere Leiterschleife mit mindestens zwei anderen Leiterschleifen bzw. äußersten weiteren Leiterschleifen verbunden sein, indem sich die Leiterschleifen beziehungsweise äußersten weiteren Leiterschleifen tangieren, überlappen, schneiden oder durch Leiterbahnen miteinander verbunden sind, sodass sie einen Verbund von Leiterschleifen bilden. Wenn sich zwei Leiterschleifen tangieren, so berühren sie sich lediglich an einer Verbindungsstelle. Überlappen sich zwei Leiterschleifen, so liegen Bereiche der Leiterschleifen übereinander. Schneiden sich zwei Leiterschleifen, so liegen die beiden Leiterschleifen nicht nur teilweise übereinander, sondern jede Leiterschleife verläuft auch teilweise im Inneren der jeweils anderen Leiterschleife. Wenn zwei Leiterschleifen durch Leiterbahnen miteinander verbunden sind, so bedeutet dies, dass die beiden Leiterschleifen beabstandet voneinander angeordnet sind und eine elektrische Verbindung zwischen den voneinander beabstandeten Leiterschleifen durch mindestens eine zusätzliche Leiterbahn im Substrat hergestellt wird, die zwischen den Leiterschleifen verläuft.

Vorzugsweise ist zwischen mindestens einem Paar von Kontaktierungselementen und dem Verbindungsbereich eine Sicherung vorgesehen. Die Sicherung bietet dabei einen wichtigen Schutz, falls ungewollt große Ströme innerhalb der Platine auftreten. In diesem Falle verhindert die Sicherung einen zu hohen Stromfluss, der einzelne Batteriezellen beschädigen könnte. Die Sicherung ist insbesondere dann von Vorteil, wenn eine Batteriezelle so beschädigt wird, sodass ihr Widerstand stark abfällt. In diesem Fall erhöht sich der Strom, der durch die Batteriezelle fließt, sehr stark. Dadurch wird die Sicherung ausgelöst, sodass ein weiterer Stromfluss durch die beschädigte Batteriezelle unterbunden wird. Eine Beschädigung anderer Batteriezellen durch zu hohe Ströme kann somit vermieden werden.

Eine Sicherung wird vorzugsweise durch ein thermisch und elektrisch leitfähiges Material gebildet, das so dimensioniert ist, dass es bei einem zu großen Strom durchbrennt bzw. beschädigt wird und somit im Fehlerfall eine Batteriezelle von anderen Batteriezellen elektrisch isoliert. Damit die Sicherung im Fehlerfall auslöst, muss das elektrisch und thermisch leitfähige Material der Sicherung einen ausreichend geringen Leiterquerschnitt aufweisen. Erfindungsgemäß sollte die Sicherung so dimensioniert werden, dass sie einen maximalen Leiterquerschnitt aufweist, der dazu geeignet ist, eine maximale thermische Leitfähigkeit der Sicherung zu gewährleisten, wobei der maximale Leiterquerschnitt durch denjenigen maximalen Leiterquerschnitt begrenzt wird, der eine Auslösung der Sicherung im Fehlerfall einer Batteriezelle gewährleistet.

Gemäß einer vorteilhaften Ausführungsform der Erfindung ist mindestens ein Paar von Kontaktierungselementen von einem elektrischen Isolator umgeben, wobei eine elektrisch und thermisch leitfähige Beabstandungsleiterbahn das Paar von Kontaktierungselementen elektrisch und thermisch leitfähig mit dem Verbindungsbereich verbindet. Der nicht elektrisch leitfähige Bereich kann erfindungsgemäß durch das Substrat der Platine gebildet werden. Durch diesen Aufbau ist ein Kontaktierungsbereich, der die Kontaktierungselemente umfasst, wohldefiniert von dem Verbindungsbereich abgeschlossen. Erfindungsgemäß kann der Verbindungsbereich von einer nichtleitenden Schicht überzogen sein. So kann sichergestellt werden, dass die Verbindungsplatte mit Batteriezellen nur über die Kontaktierungsbereiche elektrisch und thermisch leitend kontaktiert werden kann.

Die Beabstandungsleiterbahn kann als Sicherung dimensioniert sein. Eine Dimensionierung der Beabstandungsleiterbahn als Sicherung ist besonders vorteilhaft, da hierdurch vermieden werden kann, dass zu hohe Ströme bis in den Verbindungsbereich hinein wirken können. Darüber hinaus kann es vermieden werden, dass ein zu hoher Strom im Verbindungsbereich in einen Kontaktierungsbereich geleitet wird. Zwischen zwei Kontaktierungsbereichen auf einer Verbindungsplatte sind somit erfindungsgemäß stets zwei Sicherungen vorgesehen, wodurch ein besonderes elektrisches Sicherheitsniveau erreicht wird.

Es ist vorteilhaft, wenn auf dem Substrat und/oder als Material des Substrats zur thermischen Verbindung zwischen den Kontaktierungselementen ein elektrischer Isolator mit einer hohen thermischen Leitfähigkeit vorgesehen ist. Hierdurch wird die thermische Leitfähigkeit der Platine weiter erhöht, ohne dass die Menge des elektrisch und thermisch leitfähigen Materials auf der Platine erhöht werden muss. Der elektrische Isolator mit einer hohen thermischen Leitfähigkeit kann dabei als das Substratmaterial der Verbindungsplatte vorgesehen sein. Der elektrische Isolator kann erfindungsgemäß ferner eingesetzt werden, um thermisch leitfähige Verbindungselemente zwischen den Kontaktierungselementen zu bilden.

Gemäß einer möglichen Ausführungsform ist die Verbindungsplatte flexibel ausgebildet. Hierzu kann die Verbindungsplatte aus flexiblen und/oder elastischen Materialien ausgebildet sein. Beispielsweise kann ein Substrat aus einem elastischen Polymer verwendet werden. Das auf der Verbindungsplatte aufgebrachte elektrisch und thermisch leitfähige Material weist eine ausreichende Flexibilität auf, wenn es sich um ein Metall handelt. Jedoch muss die Menge des aufgebrachten Metalls so dimensioniert werden, dass es beim Verbiegen der Verbindungsplatte nicht beschädigt wird, wodurch Abschnitte der Verbindungsplatte ihre thermische und elektrische Leitfähigkeit einbüßen oder verlieren könnten. Eine flexible Verbindungsplatte lässt sich besonders gut bei der Herstellung und der Reparatur einer erfindungsgemäßen Batterie handhaben. Einer teilweisen Verformung einer Batterie beispielsweise auch beim Verpressen kann sich eine solche Verbindungsplatte besser anpassen.

Das auf der Verbindungsplatte aufgebrachte elektrisch und thermisch leitfähige Material ist vorzugsweise vorder- und rückseitig auf der Verbindungsplatte spiegelbildlich vorgesehen. Es ist erfindungsgemäß jedoch auch möglich, dass das auf der Verbindungsplatte aufgebrachte elektrisch und thermisch leitfähige Material vorderseitig in einer Anordnung aufgebracht ist, die mit einer Anordnung des elektrisch und thermisch leitfähigen auf der Rückseite nicht spiegelbildlich übereinstimmt.

Die Erfindung betrifft ferner eine Batterie mit einer Verbindungsplatte wie vorangehend beschrieben, wobei die Batterie eine Zellanordnung aufweist, wobei die Zellanordnung mehrere Batteriezellen aufweist, die in einer elektrischen Reihen- und Parallelschaltung elektrisch leitfähig miteinander verbunden sind, wobei die Zellanordnung mehrere Batteriereihen mit elektrisch in Reihe geschalteten Batteriezellen aufweist, wobei die Zellanordnung mindestens zwei Batterieabschnitte aufweist und jeder Batterieabschnitt aus mehreren elektrisch parallel geschalteten Batteriezellen besteht, und wobei jede Batteriezelle einen positiven und einen negativen Endanschluss aufweist.

Erfindungsgemäß sind die Batteriezellen der Batterieabschnitte so ausgerichtet, dass sämtliche positiven Endanschlüsse der Batteriezellen des jeweilige Batterieabschnitts in einer gemeinsamen positiven Kontaktierungsebene liegen und dass sämtliche negativen Endanschlüsse der Batteriezellen des jeweiligen Batterieabschnitts in einer gemeinsamen negativen Kontaktierungsebene liegen, dass die mindestens zwei Batterieabschnitte so zueinander angeordnet sind, dass Endanschlüsse einer Kontaktierungsebene eines ersten Batterieabschnitts unmittelbar gegenüberliegend zu Endanschlüssen einer Kontaktierungsebene eines zweiten Batterieabschnitts angeordnet sind, und dass zwischen mindestens zwei aufeinanderfolgenden Batterieabschnitten die erfindungsgemäße Verbindungsplatte angeordnet ist, wobei die Endanschlüsse der Kontaktierungsebene des ersten Batterieabschnitts und die Endanschlüsse der Kontaktierungsebene des zweiten Batterieabschnitts mit den Kontaktierungsstellen der Verbindungsplatte elektrisch und thermisch leitfähig verbunden sind, sodass die Batteriezellen der aufeinanderfolgenden Batterieabschnitte über die Verbindungsplatte in Reihe geschaltet sind, sodass die mit den Kontaktierungselementen der Verbindungsplatte thermisch und elektrisch leitfähig verbundenen Batteriezellen eines Batterieabschnitts thermisch und elektrisch leitend miteinander verbunden sind, sodass ein elektrischer Strom und ein Wärmestrom über die gesamte Zellanordnung verteilt werden und sodass ein Wärmestrom über den Kühlkanal der Verbindungsplatte aus der Batterie abgeführt wird.

Überraschenderweise hat sich herausgestellt, dass sich eine elektrisch und thermisch leitfähige Verbindungsplatte mit mindestens einem Kühlkanal zwischen den Batterieabschnitten hervorragend dazu eignet, um das Auftreten von Temperaturhotspots innerhalb einer Batterie zu vermeiden. Eine elektrisch und thermisch leitfähige Verbindungsplatte zwischen den Batterieabschnitten weist dabei mehrere Vorteile auf. Zum einen ist eine solche Verbindungsplatte besonders gut dazu geeignet, einen Strom zwischen den Batterieabschnitten zu leiten. Der Strom verteilt sich auf eine große Fläche, wodurch ein geringer Widerstand gegeben ist. Ein hoher Widerstand ist zu vermeiden, da dies Leistungsverluste bedingt. Zum anderen bietet die Verbindungsplatte den bedeutenden Vorteil, dass sich über sie thermische Energie aus den Batteriezellen besonders gut abführen lässt. Die thermische Energie wird dabei flächig verteilt. Ein elektrischer Strom und ein Wärmestrom werden mittels der Verbindungsplatten zusätzlich über die gesamte Zellanordnung verteilt. Die Verbindungsplatten gewährleisten dabei eine ganz besonders gute Wärmeleitung zwischen den Batteriezellen unterschiedlicher Batterieabschnitte. Außerdem wird thermische Energie über das Wärmeabfuhrelement abgeführt, was das Auftreten von Temperaturhotspots selbst bei großen Lade- und Entladeströmen verhindert.

Ein großer Teil der in den Batteriezellen hervorgerufenen thermischen Energie wird bei dem erfindungsgemäßen Aufbau über die Endanschlüsse der Batteriezellen durch die gesamte Zellenanordnung geleitet. Die Endanschlüsse der Batterien eignen sich zur Übertragung der thermischen Energie in besonderer Weise, da die Endanschlüsse thermisch leitend mit einem Inneren der Batterie verbunden sind und selbst aus einem thermisch und elektrisch gut leitenden Material bestehen. Dahingegen ist eine Kühlung und Wärmeabfuhr über einen Zellmantel einer Batteriezelle häufig weniger effizient, da der Zellmantel üblicherweise aus einem thermisch und elektrisch schlecht leitenden Material besteht.

Erfindungsgemäß können die positiven Endanschlüsse an einem Ende der Zellanordnung mit einer Plusleitungsanordnung und die negativen Endanschlüsse an einem Ende der Zellanordnung mit einer Minusleitungsanordnung elektrisch und thermisch leitfähig verbunden sein. Die Plusleitungsanordnung und die Minusleitungsanordnung dienen dazu, sowohl elektrischen Strom als auch Wärme aus der Zellanordnung seitlich abzuführen.

Besonders bevorzugt umfassen die Plusleitungsanordnung und die Minusleitungsanordnung jeweils eine elektrisch und thermisch leitfähige Verbindungsplatte, die die positiven Endanschlüsse beziehungsweise die negativen Endanschlüsse elektrisch und thermisch leitfähig kontaktiert. Durch eine elektrisch und thermisch leitfähige Verbindungsplatte werden die äußersten positiven Endanschlüsse beziehungsweise die äußersten negativen Endanschlüsse sternförmig miteinander verschaltet. Vorzugsweise sind die Plusleitungsanordnung und die Minusleitungsanordnung als Kupferplatten ausgebildet. Hierdurch ist aufgrund der hohen elektrischen Leitfähigkeit von Kupfer gewährleistet, dass der Strom gleichmäßig verteilt wird und niedrige Widerstandsverluste in der Plusleitungsanordnung und der Minusleitungsanordnung auftreten. Durch die hohe thermische Leitfähigkeit von Kupfer ist zudem gewährleistet, dass thermische Energie aus der Batterie abgeführt werden kann. Besonders bei großen Strömen ist die hohe elektrische Leitfähigkeit von Kupfer von Bedeutung. Aufgrund ihrer großen Fläche bildet die Kupferplatte einen erweiterten Sternpunkt, der einen besonders niedrigen thermischen und elektrischen Widerstand hat. Durch eine Variation der Dicke der Kupferplatte kann eine Veränderung von deren Wärmekapazität bewirkt werden, um die Wärmeverteilung innerhalb der Batterie zu optimieren.

Gemäß einer besonderen Ausführungsform der Erfindung sind die äußersten positiven Endanschlüsse beziehungsweise die äußersten negativen Endanschlüsse durch eine elektrisch und thermisch leitfähige Verbindungsplatte verschaltet, die eine Kühlkörperstruktur aufweist. Hierdurch kann Wärme besonders gut seitlich aus der Batterie abgeführt werden.

Gemäß einer besonderen Ausführungsform der erfindungsgemäßen Batterie sind die Batteriezellen und die Verbindungsplatten der Zellanordnung miteinander vergossen. Zusätzlich können erfindungsgemäß auch die Plusleitungsanordnung und/oder die Minusleitungsanordnung vergossen sein. Ein solcher Verguss erlaubt es, die Batteriezellen, die Verbindungsplatten und optional die Plusleitungsanordnung und die Minusleitungsanordnung in einer Position zu fixieren, in der diese elektrisch und thermisch leitfähig miteinander verbunden sind. Der Verguss ist ferner insofern vorteilhaft, als dass dieser erfindungsgemäß aus einem thermisch leitfähigen Material gefertigt sein kann. Somit lässt sich Wärmeenergie einfacher aus der Zellanordnung abführen und kann sich innerhalb der gesamten Batterie gleichmäßig verteilen.

Der Verguss besteht vorzugsweise aus einem nicht elektrisch leitfähigen Material. Hierbei ist es vorteilhaft, wenn die Batteriezellen keine Außenisolierung aufweisen. Somit können bei einer Ausführungsform mit einem nicht elektrisch leitfähigen Verguss die Batteriezellen einen besonders einfachen Aufbau aufweisen.

Auf der Batterie kann erfindungsgemäß ein Kühlblech vorgesehen sein. Ein solches Kühlblech ist dazu geeignet, Wärme aus einer Kühlflüssigkeit, die durch den mindestens einen Kühlkanal fließt, aus der Batterie an die Umgebung der Batterie abzugeben. In der Batterie kann erfindungsgemäß ein System vorhanden sein, das eine Zirkulation von Kühlflüssigkeit in mindestens einem Kühlkanal in der Verbindungsplatte bewirkt. Vorzugsweise sind die in einer Batterie vorgesehenen Verbindungsplatten und/oder das Wärmeabfuhrelement der unmittelbar mit einem Gehäuse der Batterie und/oder einem Kühlblech verbunden, um eine möglichst effiziente Wärmeabfuhr aus der Batterie zu ermöglichen. An der Batterie können gemäß einer möglichen Ausführungsform mindestens ein, vorteilhafterweise mindestens zwei Kühlmittelanschlüsse vorgesehen sein. Über einen externen Anschluss kann somit Kühlmittel durch die Batterie und insbesondere durch die in dieser enthaltenen Verbindungsplatte hindurchgepumpt werden.

Weitere vorteilhafte Ausführungsformen der Erfindung sind in den Zeichnungen dargestellt. Dabei zeigt:
Fig. 1 eine schematisch dargestellte Querschnittsansicht einer ersten Ausführungsform der erfindungsgemäßen Verbindungsplatte,
Fig. 2 eine schematisch dargestellte Querschnittsansicht einer zweiten Ausführungsform der erfindungsgemäßen Verbindungsplatte,
Fig. 3 eine schematisch dargestellte Draufsicht auf die zweite Ausführungsform der Verbindungsplatte,
Fig. 4 eine schematisch dargestellte Draufsicht auf eine dritte Ausführungsform der erfindungsgemäßen Verbindungsplatte,
Fig. 5 eine schematisch dargestellte Draufsicht auf eine vierte Ausführungsform der erfindungsgemäßen Verbindungsplatte,
Fig. 6 eine schematisch dargestellte Vorderansicht einer Batterie mit einer erfindungsgemäßen Verbindungsplatte und
Fig. 7 eine schematisch dargestellte Draufsicht auf die Batterie gemäß Fig. 6 mit einer erfindungsgemäßen Verbindungsplatte und
Fig. 8 zeigt eine schematisch dargestellte Ansicht eines Abschnitts einer Batterie mit der ersten Ausführungsform der erfindungsgemäßen Verbindungsplatte in einer Schnittansicht längs entlang in der Batterie angeordneter Batteriezellen.

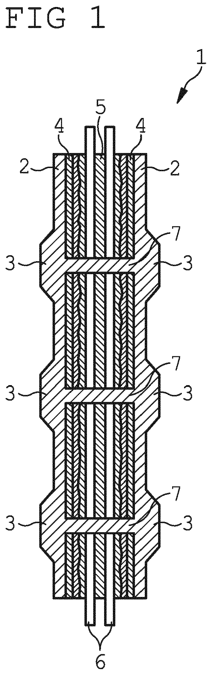

Fig. 1 zeigt eine schematisch dargestellte Querschnittsansicht einer ersten Ausführungsform der erfindungsgemäßen Verbindungsplatte 1. Die Verbindungsplatte 1 weist zwei Kontaktierungsschichten 2 auf, die mit mehreren Kontaktierungselementen 3 versehen sind. Bei diesen Kontaktierungselementen 3 handelt es sich um flächige Erhebungen, die sich aus den Kontaktierungsschichten 2 erstrecken. Jede Kontaktierungsschicht 2 und die Kontaktierungselemente 3 bestehen aus einem elektrisch und thermisch leitfähigen Material. An jeder Kontaktierungsschicht 2 ist eine Isolierungsschicht 4 vorgesehen, die einen Metallkern 5 im Inneren der Verbindungsplatte 1 gegenüber der Kontaktierungsschicht 2 elektrisch isoliert. Durch den Metallkern 5 sind zwei Kühlleitungen 6 hindurchgeführt. Durch die Kühlleitungen 6 kann eine Kühlflüssigkeit geführt werden, um die Verbindungsplatte 1 zu kühlen. Die Kontaktierungsschichten 2 sind durch Stegelemente 7 miteinander verbunden, die durch die Isolierungsschichten 4 und den Metallkern 5 hindurchgeführt sind. Somit sind die Kontaktierungsschichten 2 miteinander sowohl thermisch als auch elektrisch leitfähig verbunden. Dabei sind die Stegelemente 7 von dem Metallkern 5 elektrisch isoliert.

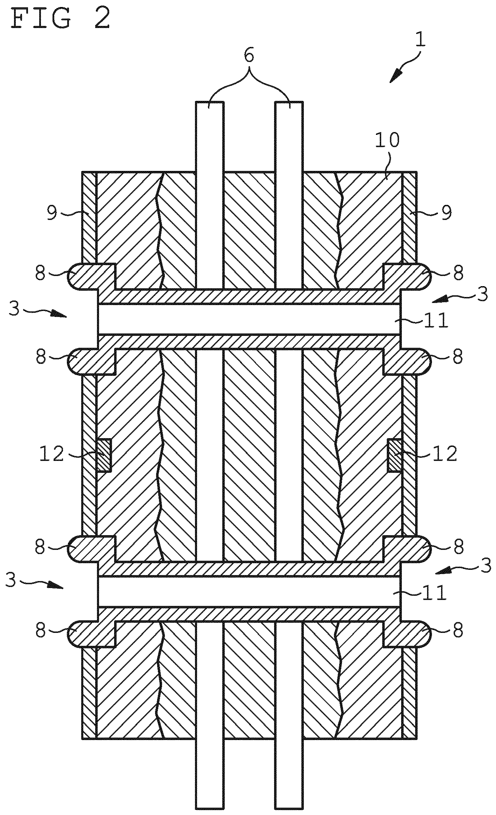

Fig. 2 zeigt eine schematisch dargestellte Querschnittsansicht einer zweiten Ausführungsform der erfindungsgemäßen Verbindungsplatte 1. Die Verbindungsplatte 1 ist mit mehreren Kontaktierungselementen 3 versehen. Jedes Kontaktierungselement 3 weist mehrere Kontaktierungspunkte 8 auf. Diese liegen auf der Verbindungsplatte 1 nach außen hin frei, während die verbleibende Oberfläche der Verbindungsplatte 1 von einer Außenisolierung 9 überzogen ist, die die Verbindungsplatte 1 elektrisch isoliert. Die Verbindungsplatte weist an jedem Kontaktierungselement 3 Stegelemente 7 auf, die jeweils zwei gegenüberliegende Kontaktierungselemente 3 auf der Verbindungsplatte elektrisch und thermisch leitfähig miteinander verbinden. In ihrer Mitte weist die Platine in einer Substratschicht 10, die nicht leitfähig ist, zwei Kühlleitungen 6 auf. Stegelemente 7 sind zur elektrischen und thermischen Verbindung der Kontaktierungselemente entlang einer Aussparung 11 durch die Substratschicht 10 hindurchgeführt. Auf der Verbindungsplatte 1 sind Leiterschleifen 12 vorgesehen, um die Kontaktierungselemente 3 miteinander elektrisch und thermisch leitfähig miteinander zu verbinden. In der vorliegenden Querschnittsansicht sind nur Abschnitte der Leiterschleifen 12 gezeigt.

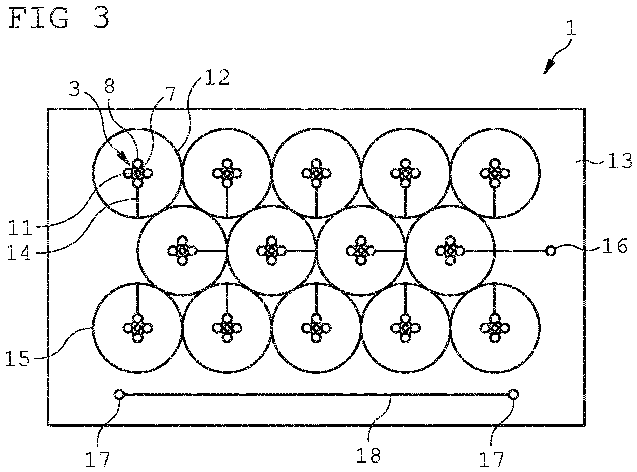

Fig. 3 zeigt eine schematisch dargestellte Draufsicht auf die zweite Ausführungsform der Verbindungsplatte 1. Hierbei wird eine Vorderseite 13 der Verbindungsplatte 1 gezeigt. Eine Rückseite (nicht gezeigt) der Verbindungsplatte 1 ist spiegelbildlich zu der Vorderseite 13 ausgeführt. Die Verbindungsplatte 1 ist als eine Platine ausgeführt, die ein elektrisch nicht leitendes Substrat umfasst, in welches thermisch und elektrisch leitfähige Elemente integriert sind. Auf der Vorderseite 13 der Verbindungsplatte 1 befinden sich mehrere thermisch und elektrisch leitfähige Kontaktierungselemente 3, die jeweils mehrere Kontaktierungspunkte 8 umfassen. In der Mitte jedes Kontaktierungselements 3 befindet sich eine Aussparung 11 in der Verbindungsplatte 1. An der Innenseite der Aussparung 11 ist ein thermisch und elektrisch leitfähiges Stegelement 7 angeordnet, das die Kontaktierungselemente 3 auf der Vorderseite 13 und der Rückseite (nicht gezeigt) der Verbindungsplatte 1 miteinander verbindet.

Die Kontaktierungselemente 3 sind von thermisch und elektrisch leitfähigen Leiterschleifen 12 umschlossen. Die Leiterschleifen 12 dienen einer besonders vorteilhaften Verteilung des elektrischen Stroms innerhalb der Verbindungsplatte 1, wenn die Verbindungsplatte 1 sich in einer Batterie befindet. Die Leiterschleifen 12 sind kreisförmig ausgebildet, wobei sich die Kontaktierungselemente 3 jeweils im Zentrum der Leiterschleifen 12 befinden. Die Leiterschleifen 12 sind jeweils durch eine thermisch und elektrisch leitfähige Beabstandungsleiterbahn 14 mit den Kontaktierungselementen 3 elektrisch und thermisch leitfähig verbunden. Die Beabstandungsleiterbahn 14 ist als eine Sicherung dimensioniert.

Die Leiterschleifen 12 bilden einen thermisch und elektrisch leitfähigen Verbindungsbereich 15. Zusätzlich ist auf der Verbindungsplatte 1 ein Kontakt 16 an den Leiterschleifen 12 vorgesehen. Außerdem sind auf der Verbindungsplatte 1 weitere Kontakte 17 an einer Messleiterbahn 18 vorgesehen. An der Messleiterbahn 18 kann beispielsweise ein Temperatursensor angeschlossen werden, um eine Temperatur der Verbindungsplatte 1 zu ermitteln.

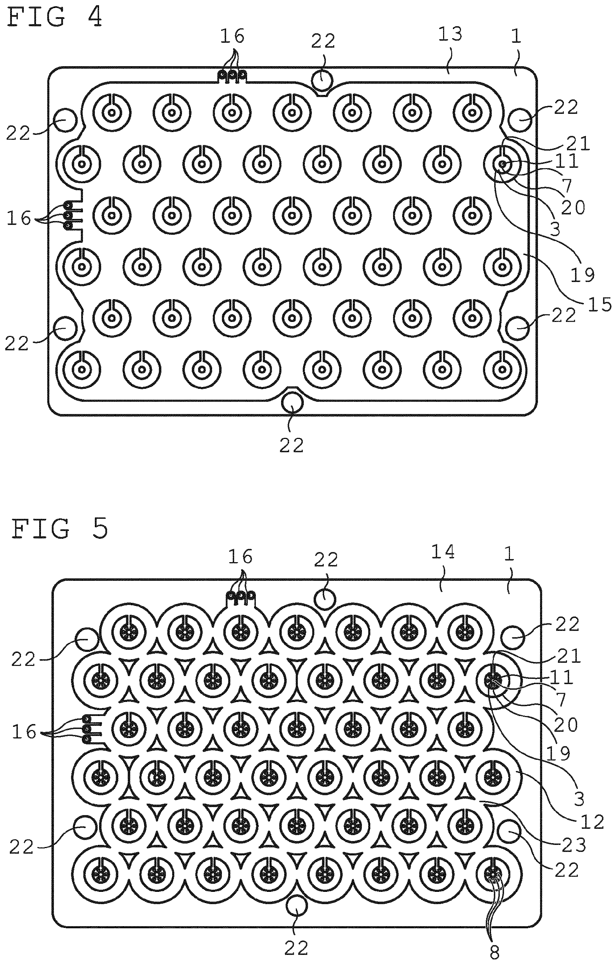

Fig. 4 zeigt eine schematisch dargestellte Draufsicht auf eine dritte Ausführungsform der erfindungsgemäßen Verbindungsplatte 1. Die Verbindungsplatte 1 ist als Platine ausgeführt, die ein elektrisch nicht leitendes Substrat umfasst, in welches thermisch und elektrisch leitfähige Elemente integriert sind. Auf einer Vorderseite 13 und auf einer Rückseite (nicht gezeigt) der Verbindungsplatte 1 befinden sich mehrere thermisch und elektrisch leitfähige Kontaktierungselemente 3. Die Kontaktierungselemente 3 umfassen jeweils einen flach ausgebildeten Kontaktierungsbereich 19 aus einem thermisch und elektrisch leitfähigen Material. Der Kontaktierungsbereich 19 ist auf beiden Seiten der Verbindungsplatte 1 freiliegend, so dass er zu einer elektrischen und thermischen Kontaktierung mit einer Batteriezelle (nicht gezeigt) geeignet ist. In der Mitte jedes Kontaktierungselements 3 befindet sich eine Aussparung 11 in der Verbindungsplatte 1. An einer Innenseite der Aussparung 11 ist ein thermisch und elektrisch leitfähiges Stegelement 7 angeordnet, das die Kontaktierungselemente 3 auf der Vorderseite 13 und der Rückseite (nicht gezeigt) der Verbindungsplatte 1 miteinander verbindet.

Der Kontaktierungsbereich 19 ist von einem elektrischen Isolator 20 umgeben, in dem eine Beabstandungsleiterbahn 21 angeordnet ist. Die Beabstandungsleiterbahn 21 verbindet den Kontaktierungsbereich 19 mit einem flächig ausgebildeten, thermisch und elektrisch leitfähigen Verbindungsbereich 15. Die Beabstandungsleiterbahn 21 ist als eine Sicherung dimensioniert.

Durch den flächig ausgebildeten Verbindungsbereich 15 wird eine besonders gute Leitung von Strom und Wärme zwischen den Kontaktierungsbereichen 19 der Verbindungsplatte 1 erreicht. Zusätzlich sind auf der Verbindungsplatte 1 mehrere, Kontakte 16 an dem flächig ausgebildeten Verbindungsbereich 15 vorgesehen. Ferner weist die Verbindungsplatte 1 Befestigungslöcher 22 auf, die es erlauben, die Verbindungsplatte 1 in einer Zellanordnung zu fixieren.

Fig. 5 zeigt eine schematisch dargestellte Draufsicht auf eine vierte Ausführungsform der erfindungsgemäßen Verbindungsplatte 1. Die Verbindungsplatte 1 ist als eine Platine ausgeführt, die ein elektrisch nicht leitendes Substrat umfasst, in welches thermisch und elektrisch leitfähige Elemente integriert sind. Auf der Vorderseite 13 und auf der Rückseite (nicht gezeigt) der Verbindungsplatte 1 befinden sich mehrere thermisch und elektrisch leitfähige Kontaktierungselemente 3. Die Kontaktierungselemente 3 umfassen jeweils einen flach ausgebildeten Kontaktierungsbereich 19 aus einem thermisch und elektrisch leitfähigen Material. Der Kontaktierungsbereich 19 ist auf beiden Seiten der Verbindungsplatte 1 freiliegend, so dass er zu einer elektrischen und thermischen Kontaktierung mit einer Batteriezelle geeignet ist. In der Mitte jedes Kontaktierungselements 3 befindet sich eine Aussparung 11 in der Verbindungsplatte 1. An einer Innenseite der Aussparung 11 ist ein thermisch und elektrisch leitfähiges Stegelement 7 angeordnet, das die Kontaktierungselemente 3 auf den beiden Seiten auf der Vorderseite 14 und der Rückseite (nicht gezeigt) der Verbindungsplatte 1 miteinander verbindet.

Der Kontaktierungsbereich 19 ist von einem elektrischen Isolator 20 umgeben, in dem eine Beabstandungsleiterbahn 21 angeordnet ist. Die Beabstandungsleiterbahn 21 verbindet den Kontaktierungsbereich 19 mit einer flächig ausgebildeten Leiterschleife 13. Die Beabstandungsleiterbahn 21 ist als eine Sicherung dimensioniert. An jedem Kontaktierungsbereich 19 sind mehrere Kontaktierungspunkte 8 vorgesehen.

Um jeden Kontaktierungsbereich 19 sind flächig ausgebildete Leiterschleifen 12 vorgesehen, die jeweils in einem vergleichsweise großen Übergangsbereich 23 miteinander verbunden sind. Durch die flächig ausgebildeten Leiterschleifen 13 und die vergleichsweise großen Übergangsbereiche 24 wird eine besonders gute Leitung von Strom und Wärme zwischen den Kontaktierungsbereichen 19 der Verbindungsplatte 1 erreicht. Zusätzlich sind auf der Verbindungsplatte 11 jeweils mehrere Kontakte 16 an zwei Leiterschleifen 12 vorgesehen. Ferner weist die Verbindungsplatte 1 Befestigungslöcher 22 auf, die es erlauben, die Verbindungsplatte 1 in einer Zellanordnung zu fixieren.

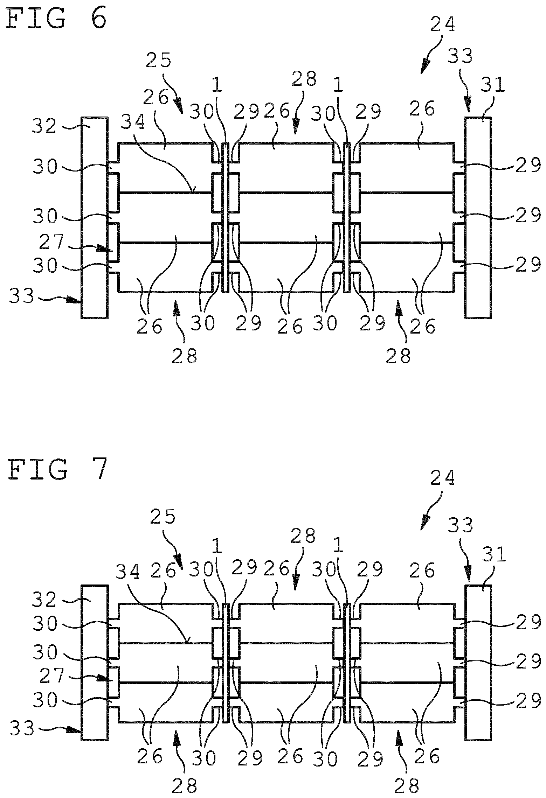

In den Figuren 6 und 7 ist schematisch eine Batterie 24 mit einer Zellanordnung 25 dargestellt. Fig. 6 zeigt eine Vorderansicht und Fig. 7 eine Draufsicht der Batterie 24. Üblicherweise weist die Batterie 24 auch einen Batteriezellenrahmen und/oder ein geeignetes Gehäuse auf. Üblicherweise weist die Batterie weiter eine Vorrichtung auf, die dazu eingerichtet ist, eine Kühlflüssigkeit durch die Batterie 24 hindurch zu pumpen. Diese und weitere übliche zusätzliche und an den jeweiligen Einsatzzweck anpassbaren Batterieteile sind nicht dargestellt.

Die Zellanordnung 25 weist mehrere Batteriezellen 26 auf. Die Batteriezellen 26 sind in einer Batteriereihe 27 angeordnet, die mehrere in Reihe geschaltete Batterieabschnitte 28 aufweist. Jeder Batterieabschnitt 28 besteht aus mehreren elektrisch parallel geschalteten Batteriezellen 26, wobei die Batteriezellen 26 übereinander und nebeneinander angeordnet sind. Die Batteriezellen 26 sind als Rundzellen ausgeführt.

Die Zellanordnung 25 weist an den außenliegenden Batterieabschnitten 28 mehrere positive Endanschlüsse 29 sowie mehrere negative Endanschlüsse 30 auf. Die positiven Endanschlüsse 29 sind durch eine Plusleitungsanordnung 31 und die negativen Endanschlüsse 30 durch eine Minusleitungsanordnung 32 elektrisch und thermisch leitend miteinander verbunden. Bei der Plusleitungsanordnung 31 und der Minusleitungsanordnung 32 handelt es sich jeweils um elektrisch leitende Platten 33 aus Kupfer.

Die Batteriezellen 26 eines Batterieabschnitts 28 sowie die Batteriezellen 26 eines benachbarten Batterieabschnitts 28 sind durch positive Endanschlüsse 29 und negative Endanschlüsse 30 jeweils über eine Verbindungsplatte 1 elektrisch und thermisch leitend miteinander verbunden. Durch die Verbindungsplatten 1 innerhalb der Batterie 24 werden die Batteriezellen 26 parallel und in Reihe geschaltet. Ein elektrischer Strom und ein Wärmestrom werden mittels der Verbindungsplatten 1 über die gesamte Zellanordnung 25 verteilt. In den Verbindungsplatten 1 ist jeweils eine Kühlleitung 6 (nicht gezeigt) vorgesehen, um Wärme aus der Batterie 24 abzuführen.

Die Batteriezellen 26 eines Batterieabschnitts 28 liegen in Zellmantelbereichen 34 aneinander an. Auf diese Weise kann ein besonders kompakter Aufbau der Batterie 24 erreicht werden. In der Zeichnung ist exemplarisch ein Zellmantelbereich 34 einer Batteriezelle 26 mit einem Bezugszeichen gekennzeichnet.

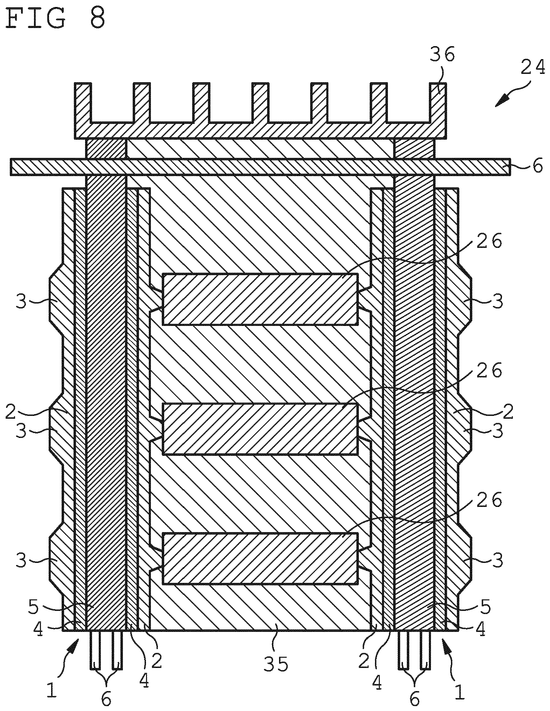

Fig. 8 zeigt eine schematisch dargestellte Ansicht eines Abschnitts einer weiteren Ausführungsform einer Batterie 24 mit einer erfindungsgemäßen Verbindungsplatte 1 in einer Schnittansicht längs entlang der in der Batterie 24 angeordneten Batteriezellen 26. Innerhalb der Batterie 24 befindet sich ein Vergussmaterial 35, das die Batteriezellen 26 teilweise umschließt. Parallel zu den Batteriezellen 26 verläuft eine Kühlleitung 6. Auf einem Gehäuse der Batterie 24 ist ein Kühlblech 36 vorgesehen. Die Batteriezellen 26 sind beidseitig jeweils mit einer Verbindungsplatte 1 kontaktiert. Die Verbindungsplatte 1 weist Kontaktierungselemente 3 in einer Kontaktierungsschicht 2 auf. Sowohl die Kontaktierungselemente 3 als auch die Kontaktierungsschicht 2 sind elektrisch und thermisch sehr gut leitfähig. Vorliegend sind die Kontaktierungselemente 3 aus Kupfer ausgebildet. Die Verbindungsplatte 1 weist zwei Isolierungsschichten 4 auf, die einen Metallkern 5 aus Kupfer gegenüber der Kontaktierungsschicht 2 isolieren. Durch den Metallkern hindurch sind Stegelemente 7 (nicht gezeigt) geführt, die jeweils die Kontaktierungsschichten 2 einer Verbindungsplatte 3 miteinander elektrisch und thermisch leitfähig verbinden. Der Metallkern 5 aus Kupfer ist dazu geeignet, Wärme aus der Verbindungsplatte 1 abzuführen. Der Metallkern 5 ist mit dem Kühlblech 36 verbunden. Ferner ist durch den Metallkern 5 eine Kühlleitung 6 hindurchgeführt, durch die in den Metallkern 5 eine Flüssigkeit hinein- und wiederhinausgeleitet werden kann. Hierdurch kann Wärme innerhalb des Metallkerns 5 noch besser an das Kühlblech abgeführt werden. Eine zweite Kühlleitung 6 ist sowohl durch den Metallkern 5 als auch durch das Vergussmaterial 35 hindurchgeführt.

### BEZUGSZEICHENLISTE

- 1.: Verbindungsplatte
- 2.: KontaktierungsSchicht
- 3.: Kontaktierungselernent
- 4.: IsolierungsSchicht
- 5.: Metallkern
- 6.: Kühlleitung
- 7.: Stegelement
- 8.: Kontaktierungspunkt
- 9.: Außenisolierung
- 10.: SubstratSchicht
- 11.: Aussparung
- 12.: Leiterschleife
- 13.: Vorderseite
- 14.: Beabstandungsleiterbahn
- 15.: Verbindungsbereich
- 16.: Kontakt
- 17.: Weitere Kontakte
- 18.: Messleiterbahn
- 19.: Koritaktierungsbereich
- 20.: Elektrischer Isolator
- 21.: Beabstandungsleiterbahn
- 22.: Befestigungsloch
- 23.: Übergangsbereich
- 24.: Batterie
- 25.: Zellanordnung
- 26.: Batteriezelle
- 27.: Batteriereihe
- 28.: Batterieabschnitt
- 29.: Positiver Endanschluss
- 30.: Negativer Endanschluss
- 31.: Plusleitungsanordnung
- 32.: Minusleitungsanordnung
- 33.: Elektrisch leitende Platte
- 34.: Zellmantelbereich
- 35.: Vergussmaterial
- 36.: Kühlblech

## Patentansprüche

1. Verbindungsplatte (1) zur Verbindung von Batteriezellen (26) für eine Batterie, wobei die Verbindungsplatte (1) auf einer Vorderseite und einer Rückseite Kontaktierungsstellen aufweist und
wobei jede Kontaktierungsstelle zu einer elektrisch und thermisch leitfähigen Kontaktierung mit einer Batteriezelle (26) ausgebildet ist, sodass mehrere Batteriezellen (26) über die Verbindungsplatte (1) thermisch und elektrisch leitfähig miteinander verbindbar sind,
wobei die Verbindungsplatte (1) als eine Platine mit einem nicht elektrisch leitfähigen Substrat ausgebildet ist,
wobei jeweils zwei Kontaktierungsstellen als voneinander beabstandete Paare von elektrisch und thermisch leitfähigen Kontaktierungselementen (3) ausgebildet sind, die auf das Substrat aufgebracht sind,
wobei jedes Paar von Kontaktierungselementen (3) ein erstes Kontaktierungselement (3) auf der Vorderseite und ein zweites Kontaktierungselement (3) auf der Rückseite der Verbindungsplatte (1) umfasst, und wobei jedes erste Kontaktierungselement (3) mit jedem zweiten Kontaktierungselement (3) elektrisch und thermisch leitfähig verbunden ist, wobei in der Verbindungsplatte (1) mindestens ein Wärmeabfuhrelement zur Abfuhr von Wärme aus der Verbindungsplatte (1) vorgesehen ist,
wobei das elektrisch nicht leitfähige Substrat zwei Substratschichten umfasst, welche auf gegenüberliegenden Seiten des Wärmeabfuhrelements aufliegen,
**dadurch gekennzeichnet, dass**
das Wärmeabfuhrelement als eine wärmeleitfähige Kernschicht ausgebildet ist und in der Kernschicht mindestens ein Kühlkanal (6) vorgesehen ist, der von einem Kühlmittel durchströmbar ist.

2. Verbindungsplatte (1) nach Anspruch 1,
**dadurch gekennzeichnet, dass**
die Kernschicht elektrisch leitfähig ist.

3. Verbindungsplatte nach Anspruch 1,
**dadurch gekennzeichnet, dass**
die Verbindungsplatte (1) mindestens einen Kühlmittelanschluss aufweist.

4. Verbindungsplatte (1) nach Anspruch 1,
**dadurch gekennzeichnet, dass** die Kontaktierungselemente (3) jedes Paars von Kontaktierungselementen (3) mittels elektrisch und thermisch leitfähiger Stegelemente (7) verbunden sind, die elektrisch gegenüber dem Wärmeabfuhrelement isoliert sind.

5. Verbindungsplatte (1) nach einem der Ansprüche 1 bis 4,
**dadurch gekennzeichnet, dass**
jedes Paar von Kontaktierungselementen (3) mit jedem anderen Paar von Kontaktierungselementen (3) über einen elektrisch und thermisch leitfähigen Verbindungsbereich (15) auf der Verbindungsplatte (1) verbunden ist.

6. Verbindungsplatte (1) nach Anspruch 5,
**dadurch gekennzeichnet, dass**
zwischen mindestens einem Paar von Kontaktierungselementen (3) und dem Verbindungsbereich (15) eine Sicherung vorgesehen ist.

7. Verbindungsplatte (1) nach einem der Ansprüche 1 bis 6,
**dadurch gekennzeichnet, dass**
die elektrisch leitfähigen Elemente der Platine aus Kupfer, Aluminium, Silber und/oder einem wärme- und elektrisch leitfähigem Verbundwerkstoff ausgebildet sind.

8. Verbindungsplatte (1) nach einem der vorhergehenden Ansprüche,
**dadurch gekennzeichnet, dass**
die Verbindungsplatte (1) flexibel ausgebildet ist.

9. Batterie mit mehreren Batteriezellen (26),
**dadurch gekennzeichnet, dass**
die Batterie eine Verbindungsplatte (1) nach einem der vorhergehenden Ansprüche enthält, wobei die Verbindungsplatte (1) zwischen den mehreren Batteriezellen (26) eingebracht ist.

10. Batterie (24) mit einer Verbindungsplatte (1) nach einem der Ansprüche 1 bis 8, wobei die Batterie (24) eine Zellanordnung (25) aufweist, wobei die Zellanordnung (25) mehrere Batteriezellen (26) aufweist, die in einer elektrischen Reihen- und Parallelschaltung elektrisch leitfähig miteinander verbunden sind, wobei die Zellanordnung (25) mehrere Batteriereihen (27) mit elektrisch in Reihe geschalteten Batteriezellen (26) aufweist, wobei die Zellanordnung (25) mindestens zwei Batterieabschnitte (28) aufweist und jeder Batterieabschnitt (28) aus mehreren elektrisch parallel geschalteten Batteriezellen (26) besteht, und wobei jede Batteriezelle (26) einen positiven und einen negativen Endanschluss (29, 30) aufweist, **dadurch gekennzeichnet, dass** die Batteriezellen (26) der Batterieabschnitte (28) so ausgerichtet sind, dass sämtliche positiven Endanschlüsse (29) der Batteriezellen (26) des jeweiligen Batterieabschnitts (28) in einer gemeinsamen positiven Kontaktierungsebene liegen und dass sämtliche negativen Endanschlüsse (30) der Batteriezellen (26) des jeweiligen Batterieabschnitts (28) in einer gemeinsamen negativen Kontaktierungsebene liegen, dass die mindestens zwei Batterieabschnitte (28) so zueinander angeordnet sind, dass Endanschlüsse (29, 30) einer Kontaktierungsebene eines ersten Batterieabschnitts (28) unmittelbar gegenüberliegend zu Endanschlüssen (29, 30) einer Kontaktierungsebene eines zweiten Batterieabschnitts (28) angeordnet sind, und dass zwischen mindestens zwei aufeinanderfolgenden Batterieabschnitten (28) die Verbindungsplatte (1) angeordnet ist, wobei die Endanschlüsse (29, 30) der Kontaktierungsebene des ersten Batterieabschnitts (28) und die Endanschlüsse (29, 30)der Kontaktierungsebene des zweiten Batterieabschnitts (28) mit den Kontaktierungsstellen der Verbindungsplatte (1) elektrisch und thermisch leitfähig verbunden sind, sodass die Batteriezellen (26) der aufeinanderfolgenden Batterieabschnitte (28) über die Verbindungsplatte (1) in Reihe geschaltet sind, sodass die mit den Kontaktierungselementen (3) der Verbindungsplatte (1) thermisch und elektrisch leitfähig verbundenen Batteriezellen (26) eines Batterieabschnitts (28) thermisch und elektrisch leitend miteinander verbunden sind, sodass ein elektrischer Strom und ein Wärmestrom über die gesamte Zellanordnung (25) verteilt werden und sodass ein Wärmestrom über das Wärmeabfuhrelement der Verbindungsplatte (1) aus der Batterie (24) abgeführt wird.

11. Batterie (24) gemäß Anspruch 10,
**dadurch gekennzeichnet, dass**
die positiven Endanschlüsse (29) an einem Ende der Zellanordnung (25) mit einer Plusleitungsanordnung (31) und die negativen Endanschlüsse (30) an einem Ende der Zellanordnung (25) mit einer Minusleitungsanordnung (32) elektrisch und thermisch leitfähig verbunden sind.

12. Batterie (24) gemäß Anspruch 11,
**dadurch gekennzeichnet, dass**
die Plusleitungsanordnung (31) und die Minusleitungsanordnung (32) jeweils eine elektrisch und thermisch leitfähige Verbindungsplatte (1) umfassen, die die positiven Endanschlüsse (29) beziehungsweise die negativen Endanschlüsse (30) elektrisch und thermisch leitfähig kontaktiert.

13. Batterie (24) gemäß einem der Ansprüche 10 bis 12,
**dadurch gekennzeichnet, dass**
die Batteriezellen (26) und die Verbindungsplatten (1) der Zellanordnung (25) miteinander vergossen sind.

14. Batterie (24) gemäß einem der Ansprüche 10 bis 13,
**dadurch gekennzeichnet, dass**
auf der Batterie (24) ein Kühlblech (36) zur Abfuhr von Wärme aus der Batterie (24) vorgesehen ist.

15. Batterie (24) gemäß einem der Ansprüche 10 bis 14,
**dadurch gekennzeichnet, dass**
an der Batterie (24) mindestens ein Kühlmittelanschluss vorgesehen ist.

## Claims

1. Connection plate (1) for connecting battery cells (26) for a battery, the connection plate (1) having contact points on a front side and a rear side, and
wherein each contact point is formed as an electrically and thermally conductive contact with a battery cell (26), so that a plurality of battery cells (26) can be thermally and electrically conductively connected to one another via the connection plate (1),
wherein the connecting plate (1) is formed as a circuit board with a non-electrically conductive substrate,
wherein in each case two contacting points are formed as pairs of electrically and thermally conductive contacting elements (3) which are spaced apart from one another and are applied to the substrate,
wherein each pair of contacting elements (3) comprises a first contacting element (3) on the front side and a second contacting element (3) on the rear side of the connecting plate (1), and wherein each first contacting element (3) is electrically and thermally conductively connected to each second contacting element (3), wherein at least one heat dissipation element is provided in the connecting plate (1) for dissipating heat from the connecting plate (1),
wherein the electrically non-conductive substrate comprises two substrate layers which are supported on opposite sides of the heat dissipating element,
**characterised in that**
the heat dissipation element is formed as a thermally conductive core layer and at least one cooling channel (6) is provided in the core layer, through which a coolant can flow.

2. Connecting plate (1) according to claim 1,
**characterised in that**
the core layer is electrically conductive.

3. Connecting plate according to claim 1,
**characterised in that**
the connecting plate (1) has at least one coolant connection.

4. Connecting plate (1) according to claim 1,
**characterised in that**
the contacting elements (3) of each pair of contacting elements (3) are connected by means of electrically and thermally conductive bar elements (7) which are electrically insulated from the heat dissipating element.

5. Connecting plate (1) according to any of claims 1 to 4,
**characterised in that**
each pair of contacting elements (3) is connected to each other pair of contacting elements (3) via an electrically and thermally conductive connecting area (15) on the connecting plate (1).

6. Connecting plate (1) according to claim 5,
**characterised in that**
a fuse is provided between at least one pair of contacting elements (3) and the connection area (15).

7. Connecting plate (1) according to any of claims 1 to 6,
**characterised in that**
the electrically conductive elements of the board are formed from copper, aluminium, silver and/or a heat and electrically conductive composite material.

8. Connecting plate (1) according to any of the preceding claims,
**characterised in that**
the connecting plate (1) is flexible.

9. Battery with several battery cells (26),
**characterized in that** said
battery includes a connection plate (1) according to any of the foregoing claims,
wherein said connection plate (1) is interposed between said plurality of battery cells (26).

10. Battery (24) with a connecting plate (1) according to one of claims 1 to 8,
wherein said battery (24) comprises a cell assembly (25), wherein said cell assembly (25) comprises a plurality of battery cells (26) electrically conductively connected together in a series and parallel electrical connection, wherein said cell assembly (25) comprises a plurality of battery rows (27) of battery cells (26) electrically connected in series, wherein said cell assembly (25) comprises at least two battery sections (28) and each battery section (28) consists of a plurality of battery cells (26) electrically connected in parallel, and wherein each battery cell (26) has a positive and a negative end terminal (29, 30), **characterized in that** the battery cells (26) of the battery sections (28) are aligned in such a way that all positive end terminals (29) of the battery cells (26) of the respective battery section (28) lie in a common positive contacting plane and that all negative end terminals (30) of the battery cells (26) of the respective battery section (28) lie in a common negative contacting plane, **in that** the at least two battery sections (28) are arranged relative to one another in such a way that end terminals (29, 30) of a contacting plane of a first battery section (28) are arranged directly opposite end terminals (29, 30) of a contacting plane of a second battery section (28), and **in that** the connecting plate (1) is arranged between at least two successive battery sections (28), wherein the end terminals (29, 30) of the contacting plane of the first battery section (28) and the end terminals (29, 30) of the contacting plane of the second battery section (28) are electrically and thermally conductively connected to the contacting points of the connecting plate (1), **in that** the battery cells (26) of the successive battery sections (28) are connected in series via the connecting plate (1), **in that** the battery cells (26) of a battery section (28) connected thermally and electrically conductively to the contacting elements (3) of the connecting plate (1)are connected thermally and electrically conductively to one another, so that an electric current and a heat flow are distributed over the entire cell arrangement (25), and so that a heat flow is dissipated from the battery (24) via the heat dissipation element of the connecting plate (1).

11. Battery (24) according to claim 10,
**characterised in that**
the positive end terminals (29) at one end of the cell assembly (25) are electrically and thermally conductively connected to a positive lead assembly (31) and the negative end terminals (30) at one end of the cell assembly (25) are electrically and thermally conductively connected to a negative lead assembly (32).

12. Battery (24) according to claim 11,
**characterised in that**
the positive lead assembly (31) and the negative lead assembly (32) each comprise an electrically and thermally conductive connecting plate (1) which makes electrically and thermally conductive contact with the positive end terminals (29) and the negative end terminals (30) respectively.

13. Battery (24) according to any one of claims 10 to 12,
**characterized in that**
the battery cells (26) and the connecting plates (1) of the cell assembly (25) are encapsulated with each other.

14. Battery (24) according to one of claims 10 to 13,
**characterised in that**
a cooling plate (36) is provided on the battery (24) to dissipate heat from the battery (24).

15. Battery (24) according to one of claims 10 to 14,
**characterised in that**
at least one coolant connection is provided on the battery (24).

## Revendications

1. Plaque de connexion (1) pour la connexion des éléments de batterie (26) d'une batterie, dans lequel la plaque de connexion (1) présentant des points de contact sur une face avant et une face arrière, et
dans laquelle chaque point de contact est formé pour établir un contact électriquement et thermiquement conductible avec une cellule de batterie (26), de sorte qu'une pluralité de cellules de batterie (26) peuvent être interconnectées thermiquement et électriquement conductible la plaque de connexion (1),
dans laquelle la plaque de connexion (1) est formée comme une carte de circuit imprimé avec un substrat non conducteur d'électricité,
dans lequel deux points de contact sont formés par des paires d'éléments de contact (3) électriquement et thermiquement conductible, qui sont espacés l'un de l'autre et sont appliqués sur le substrat,
dans laquelle chaque paire d'éléments de contact (3) comprend un premier élément de contact (3) sur le côté avant et un deuxième élément de contact (3) sur le côté arrière de la plaque de connexion (1), et dans laquelle chaque premier élément de contact (3) est relié de manière électriquement et thermiquement conductrice à chaque deuxième élément de contact (3), dans laquelle au moins un élément de dissipation de chaleur est prévu dans la plaque de connexion (1) pour dissiper la chaleur de la plaque de connexion (1),
dans lequel le substrat électriquement non conducteur comprend deux couches de substrat qui sont supportées sur des côtés opposés de l'élément de dissipation de chaleur,
**caractérisé en ce que**
l'élément de dissipation de chaleur est formé comme une couche de noyau conductrice de la chaleur et au moins un canal de refroidissement (6) est prévu dans la couche de noyau, à travers lequel un fluide de refroidissement peut s'écouler.

2. Plaque de connexion (1) selon la revendication 1,
**caractérisé en ce que**
la couche de noyau est électriquement conductrice.

3. Plaque de connexion selon la revendication 1,
**caractérisé en ce que**
la plaque de connexion (1) comporte au moins un raccord pour le fluide de refroidissement.

4. Plaque de connexion (1) selon la revendication 1,
**caractérisé en ce que**
les éléments de contact (3) de chaque paire d'éléments de contact (3) sont reliés au moyen d'éléments en forme de bande (7) électriquement et thermiquement conducteurs qui sont électriquement isolés de l'élément dissipateur de chaleur.

5. Plaque de connexion (1) selon l'une des revendications 1 à 4,
**caractérisé en ce que**
chaque paire d'éléments de contact (3) est reliée à l'autre paire d'éléments de contact (3) par une zone de connexion (15) électriquement et thermiquement conductrice sur la plaque de connexion (1).

6. Plaque de connexion (1) selon la revendication 5,
**caractérisé en ce que**
un fusible est prévu entre au moins une paire d'éléments de contact (3) et la zone de connexion (15).

7. Plaque de connexion (1) selon l'une des revendications 1 à 6,
**caractérisé en ce que**
les éléments électriquement conducteurs de la carte sont constitués de cuivre, d'aluminium, d'argent et/ou d'un matériau composite conducteur de la chaleur et de l'électricité.

8. Plaque de connexion (1) selon l'une des revendications précédentes,
**caractérisé en ce que**
la plaque de connexion (1) est flexible.

9. Batterie avec plusieurs éléments de batterie (26),
**caractérisée en ce que** ladite
batterie comprend une plaque de connexion (1) selon l'une quelconque des revendications précédentes, ladite plaque de connexion (1) étant interposée entre ladite pluralité de cellules de batterie (26).

10. Batterie (24) avec une plaque de connexion (1) selon l'une des revendications 1 à 8,
dans lequel ladite batterie (24) comprend un ensemble de cellules (25), dans lequel ledit ensemble de cellules (25) comprenant une pluralité de cellules de batterie (26) connectées ensemble de manière électriquement conductrice en une connexion électrique en série et en parallèle, dans lequel ledit ensemble de cellules (25) comprenant une pluralité de séries de batterie (27) de cellules de batterie (26) connectées électriquement en série, dans lequel ledit ensemble de cellules (25) comprenant au moins deux sections de batterie (28) et chaque section de batterie (28) consistant en une pluralité de cellules de batterie (26) connectées électriquement en parallèle, et dans lequel chaque cellule de batterie (26) ayant une borne d'extrémité positive et une borne d'extrémité négative (29, 30), **caractérisé en ce que** les éléments de batterie (26) des sections de batterie (28) sont orientés de telle sorte que toutes les bornes terminales positives (29) des éléments de batterie (26) de la section de batterie respective (28) se trouvent dans un plan de contact positif commun et que toutes les bornes terminales négatives (30) des éléments de batterie (26) de la section de batterie respective (28) se trouvent dans un plan de contact négatif commun, **en ce que** les au moins deux sections de batterie (28) sont disposées l'une par rapport à l'autre de telle sorte que les bornes terminales (29, 30) d'un plan de contact d'une première section de batterie (28) sont disposées directement en face des bornes d'extrémité (29, 30) d'un plan de contact d'une deuxième section de batterie (28), et **en ce que** la plaque de connexion (1) est disposée entre au moins deux sections de batterie (28) successives, dans lequel les bornes d'extrémité (29, 30) du plan de contact de la première partie de la batterie (28) et les bornes d'extrémité (29, 30) du plan de contact de la deuxième partie de la batterie (28) sont connectées de manière électriquement et thermiquement conductrice aux points de contact de la plaque de connexion (1), **en ce que** les éléments de batterie (26) des sections de batterie (28) successives sont montés en série par l'intermédiaire de la plaque de connexion (1), **en ce que** les éléments de batterie (26) d'une section de batterie (28) sont reliés de façon thermiquement et électriquement conductrice aux éléments de contact (3) de la plaque de connexion (1), **en ce que** les éléments de batterie (26) d'une section de batterie (28) sont interconnectées de façon thermiquement et électriquement conductrice, **en ce qu'**un courant électrique et un flux thermique sont répartis sur l'ensemble de l'agencement des éléments (25) et **en ce qu'**un flux thermique est évacué de la batterie (24) par l'intermédiaire de l'élément d'évacuation de la chaleur de la plaque de connexion (1).

11. Batterie (24) selon la revendication 10,
**caractérisé en ce que**
les bornes d'extrémité positives (29) à une extrémité de l'assemblage de cellules (25) sont connectées de manière électriquement et thermiquement conductrice à un assemblage de conducteurs positifs (31) et les bornes d'extrémité négatives (30) à une extrémité de l'assemblage de cellules (25) sont connectées de manière électriquement et thermiquement conductrice à un assemblage de conducteurs négatifs (32).

12. Batterie (24) selon la revendication 11,
**caractérisé en ce que**
le assemblage de conducteurs positifs (31) et assemblage de conducteurs négative (32) comprennent chacune une plaque de connexion électriquement et thermiquement conductrice (1) qui établit un contact électriquement et thermiquement conducteur avec les bornes d'extrémité positive (29) et les bornes d'extrémité négative (30) respectivement.

13. Une batterie (24) selon l'une quelconque des revendications 10 à 12, **caractérisée en ce que**
les éléments de la batterie (26) et les plaques de connexion (1) de l'ensemble des cellules (25) sont encapsulés les uns avec les autres.

14. Batterie (24) selon l'une des revendications 10 à 13,
**caractérisé en ce que**
une plaque de refroidissement (36) est prévue sur la batterie (24) pour dissiper la chaleur de la batterie (24).

15. Batterie (24) selon l'une des revendications 10 à 14,
**caractérisé en ce que**
au moins un raccord pour le liquide de refroidissement est prévu sur la batterie (24).
